(19) Europäisches Patentamt
European Patent Office
Office européen des brevets

(11) **EP 3 211 549 A1**

(12) **EUROPEAN PATENT APPLICATION**

(43) Date of publication:
**30.08.2017 Bulletin 2017/35**

(51) Int Cl.:
*G06F 17/50* [(2006.01)]    *G01M 7/00* [(2006.01)]

(21) Application number: **16460008.2**

(22) Date of filing: **26.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Politechnika Gdanska 80-233 Gdansk (PL)**

(72) Inventors:
• **Kalinski, Krzysztof 80-807 Gdansk (PL)**
• **Galewski, Marek 80-041 Gdansk (PL)**
• **Mazur, Michal 80-281 Gdansk (PL)**

(54) **METHOD OF THE EXAMINATION OF THE DYNAMIC PROPERTIES OF A COMPONENT OF THE MECHANICAL STRUCTURE**

(57)     A method of the examination of the dynamic properties of a component (1) of the mechanical structure is that the simulation of the part of the mechanical structure (4) not containing the examined component (1) is made, which is realized in hardware using a programmable digital logic device with a high circuit density (2), and the interaction between the simulated part of the structure and the examined component (1) are realized with kinematic exciters (3) and by measuring the load (forces and moments) resulting from these interactions.

Fig.

## Description

The present invention is related to a method of examination of the dynamic properties of a component of the mechanical structure being applicable to the fatigue tests of the mechanical structures when the dynamic properties of the examined component are unknown.

During the examination of the dynamic properties of the mechanical structures, e.g. in order to evaluate the fatigue endurance, it is necessary to build prototypes of complete structures to get a reliable strains of the examined components of the considered structures. Excitation of vibrations of alone components do not lead, however, to obtain relevant results due to boundary conditions that do not take into account the dynamic properties of the rest part of the structure. In addition, the use of specific equipment that can provide approximate properties of other parts of the mechanical structure, has many drawbacks. Such structures must be adjusted every time, which requires a considerable expenditure of time. In addition, testing of the complete structures is not always economically justified, since it requires large energy resources.

There are known ways of evaluation of the dynamic properties of components of mechanical structures consisting the construction of complete prototypes, simplified models [Gatto, M., B. Peeters, G. and Coppotelli, "Flexible shaker excitation signals for improved FRF estimation and non-linearity assessment" Proceedings of the ISMA 2010 International Conference on Noise and Vibration Engineering, 2010], real time simulation of the systems' dynamics [De Jalon, Javier Garcia, and Eduardo Bayo, "Kinematic and dynamic simulation of multibody systems: the real-time challenge," Springer Science & Business Media, 2012] and the Hardware-In-the-Loop technique for simulating the weightlessness [Agrawal, Brij N., and Richard E. Rasmussen, "Air-bearing-based satellite attitude dynamics simulator for control software research and development" Aerospace / Defense Sensing, Simulation and Controls. International Society for Optics and Photonics, 2001].

Also the simplified methods based on the use of one or multi-axial vibration actuators [Aykan, Murat and Mehmet Celik, "Vibration fatigue analysis and multi-axial effect in testing of aerospace structures, "Mechanical systems and signal processing 23.3 (2009): 897 -907] are known. In these methods either the part of the structure is replaced by another simplified structure or the excitation that simulates the boundary conditions implemented by software is applied.

A method of examination of the dynamic properties of a component of the mechanical structure according to the invention is characterized by that the calculation model of the dynamic properties of the hardware simulated mechanical structure not having the examined component is formed. The model is described by matrix differential equation:

$$M\ddot{q} + L\dot{q} + Kq = f,$$

where:

M - inertia matrix,
L - damping matrix,
K - stiffness matrix,
q - generalised displacement vector,
f - generalised forces vector.

The simulation is realized in a hardware way by a programmable digital logic device of a high circuit density with implemented algorithm containing the parameters of the computational model and the constitutive laws stored in the form of mathematical equations, to which n kinematic exciters are connected. The kinematic exciters are then installed in the selected n points on the examined component of the mechanical structure. Then the predetermined electrical signals of generalized displacement $q_1$, $q_n$, which are generated on the basis of a simulation calculation model, are sent to the n kinematic exciters, and drives the examined component into vibrations. Then the generalized forces $f_1$, ..., $f_n$, acting back from the examined component on the kinematic exciters are measured and recorded. These forces are then processed in the kinematic exciters into electrical feedback signals, that are then compared with their analogues in the calculation model of the hardware simulated mechanical structure. If the result of the comparison is positive, this calculation model of mechanical structure remains unchanged. If the result of signal comparison is negative, the calculation model of the mechanical structure is adjusted by means of the implemented algorithm. The determined corrected generalized displacements $q'_1$,..., $q'_n$ signals are then sent to kinematic exciters and then the measurements and registrations of the generalized forces $f_1$, ... $f_n$ are repeated. In the case of the next negative result of the comparison, another correction signals return is made until the end of the predetermined time of the examination, which results preferably are recorded and visualized preferably by means of a personal computer.

By using the method according to the invention there is a possibility to examine such the dynamic properties as for example fatigue life or noise emission of the selected components without having to construct the prototypes of complete structures. It makes possible to speed up the examination, to reduce significantly its costs, enables possible reduction of energy resources needed to build and examine the complete structures, virtual prototyping, provides the repeatable results in laboratory conditions, which, due to the size of the structure, could not be obtained.

The use of programmable digital logic device with a high circuit density may result in very small time delay in the implementation of the feedback loop between the simulated part of the mechanical structure and the examined real component. This can greatly increase the range of the examined signals frequencies. Some delays is always present in the system, but its negative impact can be minimized by applying hardware implemented low-pass filters. Dynamic properties of the simulated part of the mechanical structure can be determined directly on the basis of matrix equations of kinematics according to the relationship:

$$M\ddot{q} + L\dot{q} + Kq = f,$$

where:

M - inertia matrix,
L - damping matrix,
K - stiffness matrix,
q - vector of generalized displacements,
f- vector of generalized forces.

The solution of this equation is hardware implemented with the use of one of the iterative methods for solving ordinary differential equations, e. g. Newmark method.

The matrices of inertia, stiffness and damping in the equation of dynamics can be determined analytically or by using one of the methods of discretization of continuous systems, for example Finite Element Analysis (FEA), or they can result from introduced modal model, which be designed by both analytical and experimental works carried out on the actual structure. By using the modal model, matrix equation is decoupled which further simplifies the solution. However, for a good representation of kinematic exciters displacements, in the low frequency band the use of a large number of the natural vibrations shapes or adequate compensation is required, for example additional static modes, which can be determined analytically and scaled accordingly.

The description of the hardware solutions of the equation, e. g. by using VHDL, can be obtained with the use of a software that will convert the input matrices and the selected excitations points to the appropriate code in the hardware description language. This code can be later synthesized and programmed with the appropriate logic device with a high circuit density.

The invention is further illustrated in the embodiment and schematically in the Fig.

A method of the examination the dynamic properties of the component 1 of the mechanical structure 4 is realized by the simulation of the part of the mechanical structure 4 which is hardware implemented with the use of a high circuit density programmable digital logic device 2, for example FPGA (Field-Programmable Gate Array) or CPLD (Complex Programmable Logic Device), and the interaction between the simulated part of the structure 4 and the real component 1 are implemented using appropriate kinematic exciters 3, for example hexapod guaranteeing the implementation of kinematic excitation and the measurement of loads - the forces and moments resulting from these interaction.

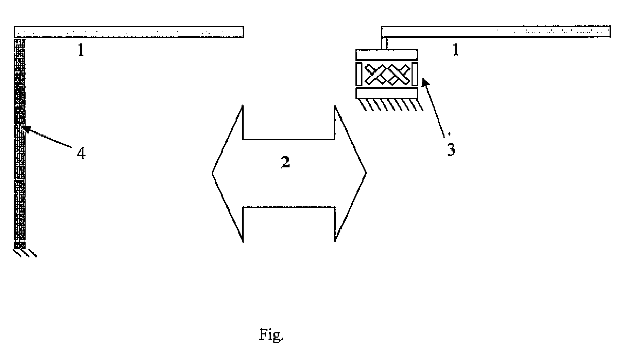

**Claims**

1. method of the examination of the dynamic properties of a component of the mechanical structure **characterized in that** the computational model of the dynamic properties of the hardware simulated mechanical structure not having the examined component is formed, that is described by matrix differential equation:

$$M\ddot{q} + L\dot{q} + Kq = f,$$

where:

M - inertia matrix,
L - damping matrix,
K - stiffness matrix,
q - generalised displacement vector,
f - generalised forces vector,

and its simulations are realized in hardware by a programmable digital logic device of a high circuit density with implemented algorithm containing the parameters of the computational model and the constitutive laws stored in the form of mathematical equations, to which n kinematic exciters are connected, which are then installed in the selected n points in the examined component of the mechanical structure, then the predetermined generalized displacement $q_1$, ..., $q_n$ electrical signals, which are generated on the basis of a simulation calculation model, are sent to the n kinematic exciters, and drives the examined component into vibrations, then the generalized forces $f_1$, ...,$f_n$, acting back from the examined component on the kinematic inductors are measured and recorded, and these forces are then processed in the kinematic exciters into electrical signal feedback that are then compared with their analogues in the calculation model of the hardware simulated mechanical structure and, if the result of the comparison is positive, this calculation model of mechanical structure remains unchanged, and if the result of signal comparison is negative, the calculation model of the mechanical structure is adjusted by means of the implemented algorithm, and the determined corrected generalized displacements $q'_1$,.... $q'_n$ signals are then sent to kinematic exciters and then the measurements and registrations of the generalized forces $f_1$, ... $f_n$ are repeated and in the case of the next negative result of the comparison,

**EP 3 211 549 A1**

another correction signals feedback is made until the end of the predetermined time of the examination, which results are preferably recorded and visualized by means of a personal computer.

Fig.

Europäisches
Patentamt

European
Patent Office

Office européen
des brevets

## EUROPEAN SEARCH REPORT

Application Number

EP 16 46 0008

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KALINSKI K ET AL: "Vibration surveillance supported by Hardware-In-the-Loop Simulation in milling flexible workpieces", MECHATRONICS, vol. 24, no. 8, 6 August 2014 (2014-08-06), pages 1071-1082, XP029101415, ISSN: 0957-4158, DOI: 10.1016/J.MECHATRONICS.2014.06.006 * section 1, last two paragraphs * * sections 2, 3; figures 3, 4 * ----- | 1 | INV. G06F17/50 G01M7/00 |
| Y | USENMEZ S ET AL: "Real-time hardware-in-the-loop simulation of electrical machine systems using FPGAs", 2009 INTERNATIONAL CONFERENCE ON ELECTRICAL MACHINES AND SYSTEMS (ICEMS 2009), 2009, pages 1-6, XP055331180, Piscataway, NJ, USA DOI: 10.1109/ICEMS.2009.5382811 ISBN: 978-1-4244-5177-7 * section II, paragraphs 1/2 * * section III; figure 1 * ----- | 1 | TECHNICAL FIELDS SEARCHED (IPC) G06F G01N G01M |
| A | KALINSKI K ET AL: "A surveillance of dynamic processes on selected mechatronic systems", ARCHIVE OF MECHANICAL ENGINEERING, vol. LX, no. 3, 2013, XP055331158, ISSN: 0004-0738, DOI: 10.2478/meceng-2013-0023 * section 3, equations (14) and (15) * ----- | 1 | |

The present search report has been drawn up for all claims

| Place of search | Date of completion of the search | Examiner |
|---|---|---|
| Berlin | 22 December 2016 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GATTO, M. ; B. PEETERS, G. ; COPPOTELLI.** Flexible shaker excitation signals for improved FRF estimation and non-linearity assessment. *Proceedings of the ISMA 2010 International Conference on Noise and Vibration Engineering,* 2010
- **DE JALON ; JAVIER GARCIA ; EDUARDO BAYO.** Kinematic and dynamic simulation of multibody systems: the real-time challenge. Springer Science & Business Media, 2012

- Air-bearing-based satellite attitude dynamics simulator for control software research and development. **AGRAWAL, BRIJ N. ; RICHARD E. RASMUSSEN.** Aerospace / Defense Sensing, Simulation and Controls. International Society for Optics and Photonics, 2001
- **AYKAN, MURAT ; MEHMET CELIK.** Vibration fatigue analysis and multi-axial effect in testing of aerospace structures. *Mechanical systems and signal processing,* 2009, vol. 23.3, 897-907